# EUROPÄISCHE PATENTSCHRIFT

(11) **EP 0 751 809 B1**
(45) Veröffentlichungstag und Bekanntmachung des Hinweises auf die Patenterteilung: **11.11.1998**
(21) Anmeldenummer: 95912265.6
(22) Anmeldetag: 22.03.1995
(51) Int. Cl.: B01D 11/02

(54) **VORRICHTUNG ZUM AUFBEREITEN UND/ODER EXTRAHIEREN VON PROBEN MITTELS EINES VERDAMPFUNGSFÄHIGEN MITTELS BEI ERHÖHTER TEMPERATUR**
DEVICE FOR PREPARING AND/OR EXTRACTING SAMPLES BY MEANS OF A VAPORISABLE AGENT AT HIGH TEMPERATURE
DISPOSITIF POUR LA PREPARATION ET/OU L'EXTRACTION D'ECHANTILLONS A TEMPERATURE ELEVEE AU MOYEN D'UN AGENT VAPORISABLE

(30) Priorität: 22.03.1994 DE 4409877; 04.06.1994 DE 4419648
(43) Veröffentlichungstag der Anmeldung: 08.01.1997
(73) Patentinhaber: LAUTENSCHLÄGER, Werner, D-88200 Leutkirch (DE)
(72) Erfinder: LAUTENSCHLÄGER, Werner, D-88200 Leutkirch (DE)
(74) Vertreter: Schmidt-Evers, Jürgen, Dipl.-Ing.
(86) Internationale Anmeldenummer: EP9501081
(87) Internationale Veröffentlichungsnummer: WO9525572

(56) Entgegenhaltungen:
- WO-A-93/22650
- US-A- 4 265 860

## Beschreibung

Die Erfindung bezieht sich auf eine Einrichtung nach dem Oberbegriff des Anspruchs 1.

Es ist bekannt für eine Mehrfach-Extraktion von Proben einen Extraktor nach der sogenannten Soxhlet-Bauweise zu benutzen, der ein Destillieren des Lösungsmittels und Exthahieren des oder der gewünschten Stoffe aus der Probe im ständigen Kreislauf ermöglicht.

Dabei gibt es solche Vorrichtungen, bei denen die Destillation und Extraktion bei einem normalen Druck (Raumdruck) oder bei erhöhtem Druck (Druckextraktion) stattfindet,.

Eine Vorrichtung der zuerst genannten bekannten Bauart ist als einstückiges Glasformteil in der Praxis bekannt, wobei es aus einem oberen Glaskolben für die Proben und einem unteren Glaskolben für das Lösungsmittel und zwei außen separat verlaufende Verbindungsleitungen gebildet ist, die den unteren und den oberen Glaskolben miteinander verbinden. Die eine Verbindungsleitung ist eine Dampfleitung, die vom unteren Glaskolben abzweigt und im oberen Bereich des oberen Glaskolbens in diesen mündet. Die andere Verbindungsleitung ist eine Überlaufleitung, die vom oberen Glaskolben in dessen unteren Bereich ausgeht, sich nach oben bis zu einer bestimmten Niveauhöhe im oberen Glaskolben erstreckt und dann nach unten in den unteren Glaskolben verläuft.

Diese bekannte Vorrichtung ist sowohl bezüglich ihrer Bauweise als auch bezüglich der mit ihr durchführbaren Verfahrensweise aufwendig. Das Aufheizen sowohl des Lösungsmittels als auch des Probenmaterials ist schwierig, weil zum einen die Wärme einer Wärmequelle, z.B. eines Bunsenbrenners schwierig auf die zu erwärmenden Materialien zu übertragen ist und zum anderen der Werkstoff Glas die Wärmeübertragung beeinträchtigt. In der Regel wird diese bekannte Vorrichtung nur in verhältnismäßig kleiner Bauweise hergestellt, so daß damit Extraktionsarbeiten nur geringeren Umfangs ausgeführt werden können. Ein weiterer Nachteil dieser bekannten Vorrichtung besteht darin, daß sie aufgrund ihres Werkstoffs Glas sehr empfindlich ist und leicht brechen kann.

Eine Druckextraktions-Vorrichtung ist in der US, A, 4 265 860 oder in der DE A1, 4114 525.9, beschrieben. Bei dieser bekannten Vorrichtung ist der Extraktor in einem druckfesten Gehäuse mit einer durch einen Deckel verschließbaren Beschickungsöffnung angeordnet. Im Betrieb dieser Vorrichtung findet während der Destillation des Lösungsmittels eine Druckerhöhung im Druckbehälter statt, wodurch der Siedepunkt des Lösungsmittels erhöht wird und deshalb mit höheren Temperaturen gearbeitet werden kann. Hierdurch wird die Leistungsfähigkeit der Vorrichtung wesentlich vergrößert. Außerdem wird durch den erhöhten Druck die Extraktion der Proben begünstigt, weil das Lösungsmittel besser in das Probenmaterial eindringen kann.

Im weiteren sind bei der aus der DE, A1, 4 114 525.9 bekannten Vorrichtung zwei Aufnahmebehälter im Druckbehälter vorgesehen, nämlich ein die Innenwandung des aus Metall bestehenden Druckbehälters auskleidender Lösungsmittelbehälter aus Kunststoff und ein darin konzentrisch angeordneter, auf einer Schulter abgestützter Probenbehälter aus Glas, dem ein Überlauf mit einem Außenrohr zugeordnet ist das einstückig mit dem Probenbehälter verbunden ist. Der Probenbehälter ist in einem Abstand über dem Grund des Lösungsmittelbehälters angeordnet, wobei er mit einem Ringflansch auf einer Innenschulter des Lösungsmittelbehälters aufliegt. Die Erwärmung des Lösungsmittels und des Probenmaterials erfolgt durch die Bestrahlung mit Mikrowellen, die durch eine Einkopplungsöffnung im unteren Bereich des Druckbehälters durch eine mit mikrowellendurchlässigem Material verkleidete Einkupplungsöffnung eingekoppelt werden. Beim Verdampfen des Lösungsmittels gelangt der Dampf in den Ringraum zwischen dem Lösungsmittelbehälter und dem Probenbehälter nach oben, wobei er durch Löcher im Ringflansch in den sich über dein Probenbehälter befindlichen Dampfraum gelangt. Im Bereich des Dampfraums ist der Druckbehälter von einer Kühleinrichtung umgeben, die durch eine Wasserringleitung in der Umfangswand des Druckbehälters gebildet ist und somit in direktem Kontakt mit der aufrechten Wandung des Druckbehälters steht. Über dem Probenbehälter ist ein perforierter Trichter angeordnet, an dem das unter Mithilfe der Kühleinrichtung an der aufrechten Innenwandung kondensierte Lösungsmittel entlangläuft und in den Probenbehälter gelangt.

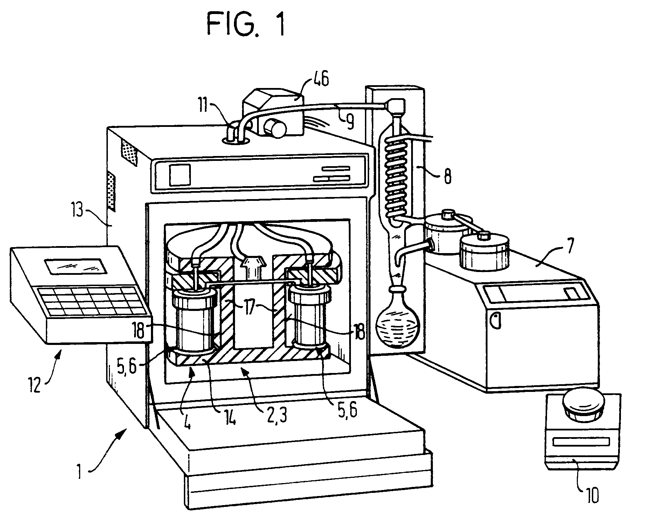

In der WO 93 22650 sind Vorrichtungen zum Verdampfen bzw. Trocknen und Extrahieren von Proben in mehreren Ausführungsbeispielen beschrieben, siehe Fig. 1 bis 23, bei diesen Ausführungsbeispielen ist der Innenraum des wenigstens einen Behälters zur Aufnahme und Behandlung der Probe mittels einer Absaugleitung an eine Absaugvorrichtung angeschlossen und mittels einer gemeinsamen oder zwei getrennten Zuführungsleitungen an eine Zuführungsvorrichtung für ein Spülglas und/oder eine Zuführungsvorrichtung für ein Reagenz- oder Lösungsmittel angeschlossen. Während der Verdampfungsbehandlung werden die beim Erhitzen der Probe entstehenden Dämpfe mittels der Absaugvorrichtung kontinuierlich abgesaugt. Dabei entsteht im Behälter ein Unterdruck, der zu einer Senkung des Siede- und Verdampfungspunktes des Reagenzmittels führt, so daß die Probe mit niedrigeren Temperaturen behandelt werden kann. Dies ist insbesondere dann von Vorteil, wenn das Probenmaterial und/oder das Reagenzmittel nicht mit höheren Temperaturen behandelt werden soll, diese z.B. nicht verträgt.

Die Figur 24 dieser Druckschrift zeigt eine Vorrichtung zum Aufbereiten von Proben unter der Wirkung von Wärme und Überdruck.

Der Erfindung liegt die Aufgabe zugrunde, die Einrichtung so weiterzubilden, daß eine rationellere Behandlung der Proben unter Vermeidung der Nachteile einer kontamination oder eines Verlustes von Anteilen der Proben während des Transportes möglich ist. Diese Aufgabe wird durch die Merkmale des Anspruches 1 gelöst.

Bei der erfindungsgemäßen Einrichtung wird die Probe nicht nur bei Überdruck extrahiert, sondern sie wird auch vor und/oder nach dem Aufbereiten und/oder Extrahieren getrocknet und zwar bei Unterdruck. Hierdurch läßt sich die angestrebte rationelle Verfahrensweise in einfacher Weise erreichen, wobei genaue Analysen und Bestandteilsfestellungen von der Probe möglich sind, weil weitgehend genaue Messwerte erreichbar sind und Meßwertverfälschungen vermieden werden. Dabei zeichnet sich die erfindungsgemäße Vorrichtung durch eine einfache Bauweise und gute, schnelle und sichere Funktion aus.

Bei beiden vorbekannten Vorrichtungen ist die Dampfbildung des Lösungsmittels beeinträchtigt. Bei der zuerst beschriebenen bekannten Vorrichtung muß der Dampf zum einen durch eine Außenieitung mit einem verhältnismäßig kleinen Innenquerschnitt und zum anderen durch eine außen verlaufende Abkühlungszone strömen. Bei der zuletzt beschriebenen bekannten Vorrichtung wird die Dampfströmung durch das Überlaufrohr behindert. Außerdem sind beide bekannte Ausgestaltungen von empfindlicher und sperriger Bauweise.

Die Weiterbildung nach Anspruch 2 ergibt den Vorteil, daß bei Gewährleistung einer einfachen Bauweise die Dampfführung verbessert wird.

Bei dieser Weiterbildung ist die Überlaufleitung als Nut oder Kanal in den Körper bzw. in die Wandung des Probenbehälters integriert. Hierdurch steht die Überlaufleitung der Dampfführung nicht mehr im Wege und außerdem ergibt sich eine kleinere, kompakte und unempfindliche Bauweise, weil eine vorstehende Leitung entfällt, die zum Bruch oder einer Beschädigung neigt.

Durch die Weiterbildung nach Anspruch 3 wird die Beheizung des Lösungsmittels und/oder des Probenmaterials verbessert und es können auch solche Lösungsmittel benutzt werden, die Mikrowellen nicht absorbieren. Bei dieser Weiterbildung werden das Lösungsmittel und/oder das Probenmaterial ggf. zusätzlich mittelbar beheizt, so daß die Funktionszeit wesentlich vermindert und somit die Leistungsfähigkeit wesentlich erhöht werden kann.

Mit der Weiterbildung nach Anspruch 5 wird bei Gewährleistung der Sicherheit und einer stabilen Bauweise für den Druckbehälter eine einfache und kostengünstig herstellbare Bauweise erreicht. Bei dieser Weiterbildung ist der Druckbehälter zugleich Behälter für das Lösungsmittel, wobei aufgrund des Wegfalls einer Einkopplungsöffnung eine weitere wesentliche Vereinfachung erzielt wird und eine einfachere und leistungsfähigere sowie sichere Einkopplung gewährleistet ist.

Die Weiterbildung nach Anspruch 6 bezieht sich darauf, die Kühlung bzw. Kondensatbildung zu verbessern.

Bei dieser Weiterbildung ist die Kühleinrichtung im Bereich des Deckels des Druckbehälters angeordnet. Hierdurch wird nicht nur die Wandung des Druckbehälters von einer Schwächung freigestellt, sondern Träger der Kühleinrichtung ist der Deckel, an bzw. in dem sich die Kühleinrichtung einfacher und kostengünstiger anordnen, befestigen bzw. ausbilden läßt.

Bei der Weiterbildung nach Anspruch 7 ist bei Gewährleistung einer einfachen und stabilen Bauweise eine nach oben entnehmbare Halterung des Probenbehälters im Druckbehälter möglich, wobei der Probenbehälter auf einem vorzugsweise zentralen und stangenförmigen Fuß steht, der die Anordnung der unter dem Probenbehälter befindlichen Kammer für das Mittel ermöglicht

Weitere Weiterbildungen der Erfindung umfassen Merkmale, die zur Problemlösung beitragen, die Bauweise vereinfachen und auch verkleinern, so daß der Aufnahmeraum des Druckbehälters vergrößert werden kann, die Einsparung von Bauteilen ermöglichen, die Funktion verbessern und sicherer machen und außerdem zu einer kostengünstigen Bauweise führen.

Nachfolgend werden die Erfindung und weitere durch sie erzielbare Vorteile anhand von bevorzugten Ausführungsbeispielen und einer Zeichnung näher erläutert. Es zeigt
Fig. 1 eine erfindungsgemäße Vorrichtung zur Verdampfungsbehandlung von Proben bei verringertem Druck/Unterdruck in wenigstens einem wahlweise zu öffnendem und zu schließendem Behälter in vereinfachter perspektivischer Vorderansicht;
Fig. 2 einen vertikalen Teilschnitt eines im Heizbereich der Vorrichtung angeordneten Halters für einen oder mehrere Behälter;
Fig. 3 eine erfindungsgemäße Vorrichtung zum Extrahieren von Proben in wenigstens einem Behälter mittels eines Lösungsmittels bei erhöhter Temperatur und erhöhtem Druck in vereinfachter perspektivischer Vorderansicht.
Fig. 4 einen vertikalen Teilschnitt durch einen im Heizbereich der Vorrichtung angeordneten Halter für den Behälter und durch den Behälter.

Die Hauptteile der Vorrichtung 1 sind ein vorzugsweise mit Mikrowelle wirksames Heizgerät 2 mit einem z.B. durch eine Tür verschließbaren Heizraum 3, ein darin angeordneter Halter 4 mit mehreren, vorzugsweise vier oder sechs Stellplätzen 5 für Behälter 6, eine Saugpumpe 7, ein Kondensations-Kühler 8 der in der zur Saugpumpe 7 führenden Saugleitung 9 angeordnet ist, mehrere Zuführungsleitungen 11 oder eine gemeinsame und in mehrere Zuführungsleitungen verzweigende Zuführungsleitung für ein Lösungsmittel oder ein Gas, z.B. Luft oder ein Inertgas, und eine elektronische Steuereinrichtung 12, die vorzugsweise einen Computer aufweist und nach vorgegebenen oder eingebbaren Programmen zu arbeiten vermag, wobei der Steuereinrichtung 12 eine Tastatur und ein Display oder ein Bildschirm zur Angabe von Steuerungsdaten vorzugsweise zugeordnet ist. Außerdem ist der Vorrichtung 1 eine Waage 10 zugeordnet, die sich innerhalb oder außerhalb des Heizraumes 3 befindet, wobei es sich vorzugsweise um eine elektronische Waage 10 handelt, die durch eine elektrische Steuerleitung mit der Steuereinrichtung 12 verbunden ist. Letztere kann in die Vorrichtung integriert sein oder in dem die Tastatur und den Bildschirm enthaltenden Gehäuse angeordnet sein.

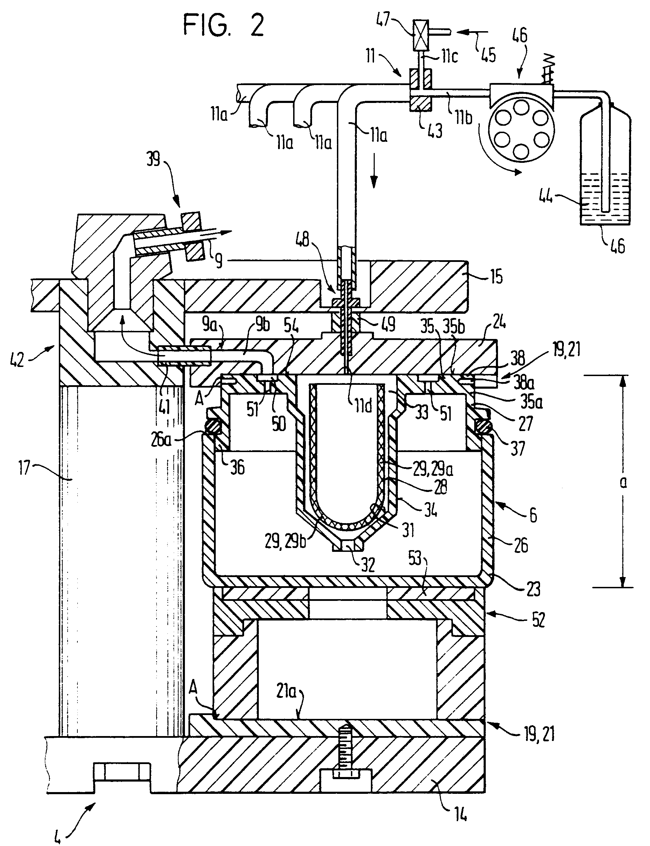

Das Heizgerät 2 ist in ein quaderförmiges Gehäuse 13 integriert, von dessen Frontseite aus der Heizraum 3 in Form einer quaderförmigen Ausnehmung zugänglich und durch eine insbesondere hochschwenkbare Klappe dicht verschließbar ist. Die Saugleitung 9 und die Zuführungsleitung 11 münden durch zugehörige Öffnungen in den Heizraum 3 ein. Der Halter 4 besteht aus Mikrowellen durchlässigem Material, insbesondere Kunststoff wie Polypropylen und ist ein Drehteil mit einer unteren Drehplatte 14 und einer oberen Drehplatte 15, zwischen denen die Behälter 6 gehalten sind. Das Drehteil kann im Sinne einer fortlaufenden Rotation oder auch einer hin- und hergehenden Schwenkbewegung, vorzugsweise um etwa 360°, durch einen Antrieb angetrieben sein. Die Platten 14, 15 sind durch ein zentrales sich vertikal erstreckendes Verbindungsteil, hier ein Verbindungsrohr 17, fest miteinander verbunden, so daß sie das Verbindungsrohr 17 radial nach außen überragen und zwischen sich eine gemeinsame Ringausnehmung 18 oder einzelne Ausnehmungen zur Aufnahme der Behälter 6 bilden. Wie insbesondere Figur 2 zeigt, bestehen die einander gleichen Behälter 6 jeweils aus einem Topf 23 und einem flachen Deckel 24, der darauf ggf. bei Zwischenlage einer Ringdichtung aufliegt. Die Deckel 24 sind jeweils in noch zu beschreibender Weise unter der oberen Platte 15 vertikal nachgiebig gehalten.

Vorzugsweise ist an der Oberseite der unteren Platte 14 und/oder an der Unterseite des Deckels 24 im Bereich jedes Stellplatzes 5 eine Führung 19 für den Topf 23 vorgesehen, die eine radial nach innen verlaufende Bewegungsführung beim Einsetzen des Topfes 23 von der Seite her zwischen die Platte 14 und den Deckel 24 vorgibt. Die Führung 19 kann durch eine Vertiefung 21 mit einer ebenen Grundfläche 21a gebildet sein, deren sich in Umfangsrichtung erstreckende Breite an die Breite des vorzugsweise zylindrischen Topfes 23 angepaßt ist und radial einwärts einen Anschlag A für die Einschubbewegung des Topfes 23 bildet.

Der Topf 23 des Behälters 6 besteht aus mehreren im vorliegenden Falle zwei Teilen, nämlich einem Topfunterteil 26 und einem an seinem oberen Rand dicht aufliegendem Topfoberteil 27, in dessen Zentrum eine oberseitig offene Ausnehmung bzw. Kammer 28 für ein Probenaufnahmeteil 29 vorgesehen ist. Bei der vorliegenden Ausgestaltung ist die Kammer 28 durch ein vertikales zylindrisches Loch gebildet, dessen Grund mit einer Kegelfläche 31 von etwa 45° Neigung nach unten konvergent geformt ist. Die Kammer 28 ist durch einen von ihr vorzugsweise zentral nach unten verlaufenden Ablaufkanal 32 nach unten offen. Die Querschnittsform, - größe und Tiefe der Kammer 28 entspricht in etwa der Querschnittsform, - größe und Höhe des Probenaufnahmteils 29, so daß letzteres mit Bewegungsspiel von oben in die Kammer 28 einsetzbar ist. Um das Probenaufnahmeteil 29 wieder entnehmen zu können, weist die Kammer 28 in ihrem oberen Bereich eine oder mehrere z.B. durch Querschnittserweiterungen gebildete Freiräume 33 auf, in deren Bereich der obere Rand des vorzugsweise topfförmigen Probeaufnahmeteils 29 manuell oder z.B. mit einer Pinzette ergriffen werden kann.

Bei der vorliegenden Ausgestaltung weist das Probenaufnahmeteil 29 eine hohlzylindrische Umfangswand 29a und einen vorzugsweise nach außen konvex gerundeten Boden 29b auf, und es besteht aus einem für eine Flüssigkeit durchläßigem und Mikrowellen durchlässigen oder teilabsorbierendem Material, insbesondere Filtermaterial, vorzugsweise Fasermaterial aus Glas oder Kunststoff, etwa in der Ausgestaltung eines Fließes, und es hat eine Wanddicke von etwa 0,5 bis 2 mm, insbesondere etwa 1 mm. In der topfförmigen Form hat das Probeaufnahmeteil 29 eine zu seiner Ergreifung und Handhabung ausreichende Festigkeit bzw. Steifigkeit, so daß es ergriffen werden kann, ohne plattgedrückt zu werden. Der Durchmesser des Probenaufnahmeteils 29 beträgt etwa 20 mm und seine Höhe etwa 40 mm.

Die Kammer 28 ist vorzugsweise durch ein dünnwandiges Topfteil 34 gebildet, das vorzugsweise einstückig mit dem Topfoberteil 27 verbunden ist. Hierzu kann eine flanschförmige radiale Wand 35 dienen, die auf dem Rand des Topfunterteils 26 aufliegt und diesen zwecks Zentrierung übergreift oder mit einem unterseitigen Ansatz, insbesondere Ringansatz 36, in diesen eingreift. Zur Abdichtung ist zwischen der Wand 35 und dem freien Rand 26a eine Ringdichtung vorgesehen, hier ein O-Ring 37, der in einer Umfangsnut des Ringansatzes 36 sitzt und zwischen dem Rand 26a und der Wand 35 abdichtet. Bei der vorliegenden Ausgestaltung ist die flanschförmige radiale Wand 35 mit einem hohlzylindrischen Wandteil 35a vorzugsweise domförmig ausgebildet, wobei eine ebene oberseitige Anlagefläche 35b für den Deckel 24 sich über dem freien Rand 26a befindet. Hierdurch wird durch unterschiedliche Domhöhen nicht nur eine Anpassung zwischen vorhandenen Topfhöhen und Deckelhöhen geschaffen, sondern es läßt sich auch das Volumen und die Höhe der Kammer 28 vergrößern.

Vorzugsweise ist an der Unterseite des Deckels 24 oder an der Oberseite des Topfoberteils 27 eine Lippendichtung vorgesehen, deren Dichtungslippe 38 am Deckel 24 oder vorzugsweise am Topfoberteil 27 einstückig angeformt ist und sich bezüglich der vertikalen Mittelachse des Behälters 6 radial nach außen erstreckt und durch eine schmale Umfangsnut 38a in der Wand 35 gebildet ist.

Der Innenraum jedes Behälters 6 ist durch die Wand 35 durchsetzende und sich im Deckel 24 radial einwärts fortsetzende Saugkanalzweige 9a mit der gemeinsamen Saugleitung 9 verbunden, die sich nach außen erstreckt und mit dem Kühler 8 sowie der Saugpumpe 7 verbunden ist. Durch Vereinigung der Saugleitungszweige 9a erfolgt im Bereich einer sogenanten, an sich bekannten Drehanschlußamatur 39 im Zentrum des Halters 4, von der sich die Saugkanalzweige 9a vorzugsweise durch Hülsen 41 aus elastisch biegsamen Material, insbesondere Kunststoff, erstrecken, die in entsprechenden Löchern des zugehörigen Deckels 24 und eines davon innenseitig angeordneten Teils 42 (Verbindungsrohr 17) des Halters 4 für die Armatur 39 sitzen.

In vergleichbarer Weise erstreckt sich die gemeinsame Zuführungsleitung 11 in den Heizraum 3, und sie ist durch von ihr ausgehende Zuführungsleitungszweige 11a mit dem Innenraum jedes Behälters 6 vorzugsweise zentral verbunden. Sowohl für die Saugleitung 9 als auch für die Zuführungsleitung 11 bzw. - zweige bedarf es einer Drehanschluß-Armatur, wenn der Halter 4 im Sinne eines Rotors durch den nicht dargestellten Antrieb gedreht wird. Für einen hin- und hergehenden Schwenkantrieb genügen Leitungsschlaufen, die das Schwenken gewährleisten.

In Figur 2 ist die Leitungsführung der Zuführungsleitung 11 mit den an einem Abzweigteil 43 abzweigenden Zuführungsleitungszweigen 11a zu den Behältern 6 dargestellt. Die Zuführungsleitung 11 bzw. ihre Zweige 11a dienen der Zuführung eines insbesondere flüssigen Reagenz- bzw. Lösungsmittels 44 und/oder eines Spülgases 45, z.B. Luft oder ein Inertgas. Hierzu dienen zwei weitere Zuführungsleitungszweige 11b, 11c, von denen der eine Zweig 11b sich von einem Reservoir 46 für das Lösungsmittel 44 über eine Pumpe 46 und der andere Zweig 11c sich von einem Reservoir (nicht dargestellt) für das Spülgas vorzugsweise über ein ein- und abschaltbares sowie einstellbares Belüftungsventil 47 zur Zuführungsleitung 11 erstreckt. Die Zuführungsleitungszweige 11a durchsetzen die obere Platte 15 jeweils im Bereich einer Anschlußarmatur 48, die auch als Halterungselement für den Deckel 24 dienen kann, der in einem Abstand unter der oberen Platte 15 angeordnet ist und vertikal elastisch nachgiebig daran gehalten ist. Hierzu dient ein elastisches Druckstück 49, das zwischen der oberen Platte 15 und dem Deckel 24 angeordnet ist und die vertikale Nachgiebigkeit des Deckels 24 gewährleistet, der durch die das Druckstück 49 durchsetzende und in den Deckel 24 einfassende Anschlußarmatur 48 an der oberen Platte 15 aufgehängt sein kann. Die Mündungskanäle 11d der Zweige 11a münden zentral in den Innenraum des zugehörigen Behälters.

An der Oberseite des Topfoberteils 27 ist koaxial eine Nut oder Ringnut 50 angeordnet, in deren Bereich der zugehörige Saugleitungszweig 9a als winkelförmiger Kanal 9b im Deckel 24 mündet. Innerhalb der Ringnut 50 sind mehrere auf dem Umfang gleichmäßig verteilt angeordnete Durchgangslöcher 51 in der Wand 35 vorgesehen, hier vier Stück, die eine gleichmäßige Absaugung des Innenraums des Behälters 6 gewährleisten.

Die Topfteile 26, 27 und ggf. auch der Deckel 24 können aus im wesentlichen mikrowellendurchläßigem Material wie Kunststoff, Glas, Quarz oder Keramik bestehen, oder sie können aus Mikrowellen teilabsorbierendem Material bestehen, so daß sie sich bei der Bestrahlung durch den nicht dargestellten Mikrowellen-Generator erwärmen und dadurch indirekt wirksame Heizelemente oder Hilfs-Heizelemente zum Erwärmen des Probenmaterials bilden oder zur Vermeidung von Kondensation insbesondere im oberen Bereich der Behälterinnenwandung dienen. Vorzugsweise besteht ein solcher Werkstoff aus einem Kunststoff, in dem Materialteile, inbesondere Partikel aus mikrowellenabsorbierendem Material, vorzugsweise Graphit, eingemischt oder legiert sind. Ein solcher Kunststoff ist unter der Bezeichnung Weflon bekannt.

Bei der Ausgestaltung gemäß Figur 2 ist zwischen dem Behälter 6 und der unteren Platte 14 ein Sockel 52 für den Topf 23 gehalten. An der Oberseite des Sockels 52 kann eine Platte 53 aus Mikrowellen teilsabsorbierendem Material angeordnet sein zwecks zusätzlicher indirekter Beheizung von unten. Das Topfunterteil 26 mit seinem vorzugsweise ebenen Boden besteht vorzugsweise aus durchsichtigem Material wie Glas, Quarz oder Kunststoff.

In der entspannten Normalstellung des Deckels 24 ist die vertikale Distanz a zwischen dessen unterer Anlage- bzw. Dichtfläche 54 und der unteren Platte 14 oder dem Sockel 52 etwas geringer bemessen als die Höhe des Topfes 23. Infolgedessen liegt der Deckel 24 mit einer gewissen Vorspannung des Druckstücks 49 auf dem Topf 23 auf, nachdem letzterer von der Seite her dazwischengeschoben worden ist. Beim Einschieben oder seitlichem Rausziehen werden die Leitungsverbindungen der Saugleitungszweige 9a und der Zuführungsleitungszweige 11a mit dem Innenraum des zugehörigen Behälters 6 selbsttätig geschaffen (beim Einschieben) oder getrennt (beim Herausziehen). Hierdurch ist eine handhabungsfreundliche und schnelle Arbeitsweise möglich.

Diese Vorrichtung 1 eignet sich zum Trocknen und/oder Extrahieren von vor dem Einschieben in das Probenaufnahmeteil 29 eingegebenem Probenmaterial. In beiden Fällen wird im Betrieb der Vorrichtung 1 das Probenmaterial durch direkte Erwärmung durch die Mikrowellen (wenn es sich um Mikrowellen absorbierendes Probenmaterial handelt) und/oder mittelbar durch die vorbeschriebenen Heizelemente erwärmt, was aufgrund der Drehung oder Schwenkung des Halters 4 gleichmäßig stattfindet. Bei der Erwärmung freiwerdende Dämpfe werden mittels der Absaugung aus den Behältern 6 abgesaugt, wobei aufgrund der Gasströmung des Spülgases 45 eine vollständige Ausspülung der Dämpfe erfolgt. Aufgrund der Absaugung stellt sich in den Behältern 6 auch ein Unterdruck ein, der den Siedepunkt der zu verdampfenden Flüssigkeiten z.B. Wasser oder Feuchtigkeit und/oder des Lösungsmittels 44 senkt und somit die Verdampfung forciert und/oder bei niedrigeren Temperaturen ermöglicht. Außerdem wird durch die Saugwirkung die Abdichtung des Deckels 24 verbessert.

Die Vorrichtung 1 ist dazu eingerichtet, das Spülgas 45 und/oder das Lösungsmittel 44 zuzuführen und damit die Probe zu behandeln, letzteres ist durch Ein- oder Abschalten der Pumpen 46 oder unterschiedliche Pumpengeschwindigkeiten einstellbar.

Der Vorrichtung 1 ist im Arbeitsbereich des vorhandenen Labors eine weitere Vorrichtung 101 zugeordnet, mit der das Probematerial bei Über- oder Hochdruck extrahiert werden kann.

Die Hauptteile der Vorrichtung 101 sind ein vorzugsweise mit Mikrowellen wirksames Heizgerät 102 mit einem Heizraum 103, der durch eine Tür 103a verschließbar ist, ein im Heizraum 103 angeordneter Halter 104 mit mehreren, vorzugsweise vier oder sechs Stellplätzen 105 für Druckbehälter 106, jeweils ein Überdruck-Ventil 107 für jeden Druckbehälter 106, das bei Überschreitung eines bestimmten Behälterinnendrucks (Überdrucks) selbsttätig öffnet und aufgrund der Spannung eines elastischen Druckstücks wieder schließt und jeweils eine Einstellvorrichtung 108 für jedes Ventil 107 zum Einstellen seiner elastischen Vorspannung, d.h. zum Einstellen des Behälterinnendruckes, bei dem das Ventil 107 sich selbsttätig öffnet, und eine Kühleinrichtung 110 für jeden Druckbehälter 106, die mit einer gemeinsamen Kühlmittelversorgung 110a, z.B. eine Kühlmittelpumpe 110b, insbesondere Wasserpumpe, verbunden sein können.

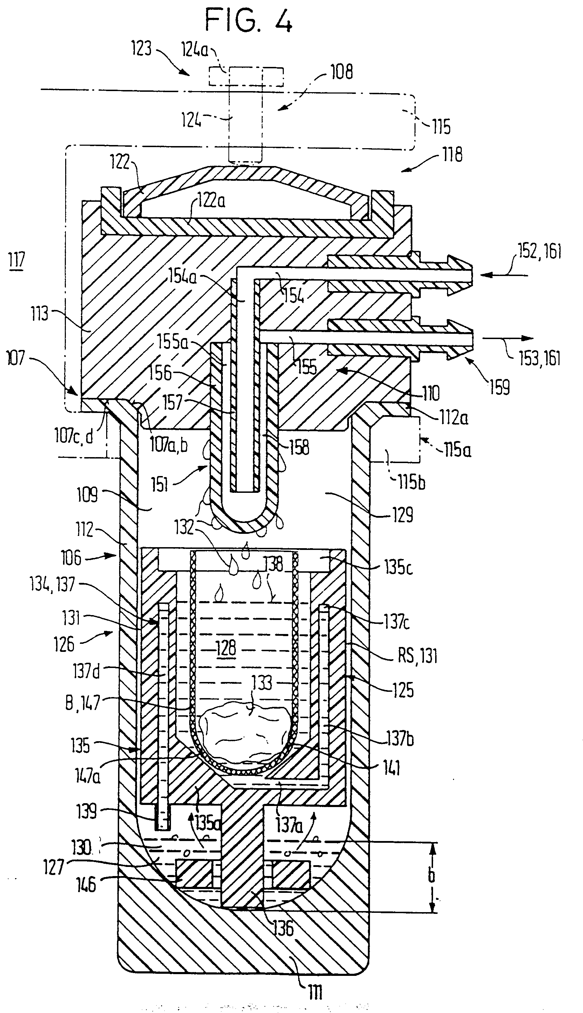

Die Druckbehälter 106 sind untereinander gleich ausgestaltet und bestehen jeweils aus einem topfförmigen Gehäuse 109 mit einem Gehäuseboden 111 und einer hohlzylindrischen, sich vertikal erstreckenden Gehäusewand 112. Die durch einen Deckel 113 verschließbare Gehäuseöffnung wird durch den oberen Innenrand der Gehäusewand 112 begrenzt (Fig. 4).

Das Ventil 107 ist im oberen Bereich des Druckbehälters 106 angeordnet, wobei vorzugsweise sein Ventilglied durch den Deckel 113 gebildet ist. Bei Überschreitung eines gewissen Innendrucks im Druckbehälter 106 öffnet das Ventil 107 automatisch, so daß ein Teil des Innendrucks nach außen entweichen kann. Hierdurch wird verhindert, daß der Innendruck einen vorbestimmten Wert übersteigt und der Druckbehälter 106 überbelastet wird bzw. explodiert.

Der Ventilsitz des Ventils 107 ist am oberen Innenrand der hohlzylindrischen Gehäusewand 112 ausgebildet und wird durch eine konzentrisch an der zylindrischen Gehäusewand 112 angeordnete Kegelsitzfläche 107a, die nach unten konvergiert, und/oder horizontale Oberfläche 107c gebildet. Der Kegelwinkel beträgt etwa 45 bis etwa 75°, vorzugsweise etwa 60°. Eine entsprechend geformte Kegeldichtfläche 107b und/oder horizontale Dichtfläche 107d weist der auf die Gehäusewand 112 von oben einsetzbare Deckel 113 auf.

Der Halter 104 ist ein Drehteil mit einer unteren Drehplatte 114 und einer oberen Drehplatte 115, zwischen denen die Druckbehälter 106 gehalten sind. Das Drehteil kann im Sinne einer fortlaufenden Rotation oder auch einer hin- und hergehenden Schwenkbewegung, vorzugsweise um etwa 360° angetrieben sein, um eine gleichmäßige Beheizung der Druckbehälter zu erreichen. Die Drehplatten 114, 115 sind durch ein sich vertikal erstreckendes Verbindungsteil, hier ein Verbindungsrohr 117, fest miteinander verbunden, so daß sie das Verbindungsrohr 117 radial nach außen überragen und zwischen sich eine gemeinsame Ringausnehmung 18 oder - wenn der Halter 104 ein runder Block ist - einzelne, radial einwärts gerichtete Ausnehmungen zur Aufnahme der Druckbehälter 106 bilden. Vorzugsweise ist an der Oberseite der unteren Drehplatte 114 im Bereich jedes Stellplatzes 105 eine Führung 119 für den Druckbehälter 106 vorgesehen, die eine radial nach innen verlaufende Bewegungsführung mit einem Bewegungsanschlag A beim Einsetzen des Druckbehälters 106 von der Seite her zwischen die Drehplatten 114, 115 vorgibt. Die Führung 119 kann durch eine Vertiefung 121 mit einer ebenen Grundfläche 121a gebildet sein, deren sieh in Umfangsrichtung erstreckende Breite an die Breite des vorzugsweise zylindrischen Druckbehälters 106 angepaßt ist.

Wie insbesondere aus Fig. 4 zu entnehmen ist, wird die jeweils einem Stellplatz 105 zugeordnete Einstellvorrichtung 108 durch eine einstellbare Spannvorrichtung 123 insbesondere eine Spannschraube 124 gebildet, die von oben zugänglich in ein Gewindeloch der oberen Drehplatte 115 eingeschraubt ist. Ein elastisches Druckstück 122 ist zwischen dem Druckbehälter 106 und den Drehplatten 114, 115, vorzugsweise auf dem Deckel 113 und zwischen letzterem und der Spannschraube 124 angeordnet. Das Druckstück 122 wird vorzugsweise durch ein hohlkegelförmiges Formstück gebildet, das in einer oberseitigen Ausnehmung des Deckels 113 oder einer Druckscheibe 122a aus hochfestem Material, insbesondere Kunststoff angeordnet sein kann. Der Spannschraube 124 ist an ihrem oberen Ende ein Angriffselement 124a für ein Drehwerkzeug angeordnet. Durch entsprechendes Anziehen der Spannschraube 124 läßt sich das Ventil 107 so einstellen, daß es bei einem wahlweisen Druckbehälter-Innendruck öffnet und abbläst.

Im Rahmen der Erfindung ist es auch möglich, den bzw. die Druckbehälter nicht stehend zwischen den Drehplatten 114, 115 anzuordnen, sondern hängend, wobei jeweils ein Randflansch 112a des topfförmigen Gehäuses 109 von einer unteren Drehplatte 115a mit einer entsprechenden radialen Einsteckausnehmung 115b untergriffen ist, wie es in Fig. 4 andeutungsweise dargestellt ist. Bei einer solchen hängenden Anordnung kann der Gehäuseboden 111 nicht nur innen sondern auch außen insbesondere halbkugelförmig gerundet sein, wodurch Material eingespart werden kann.

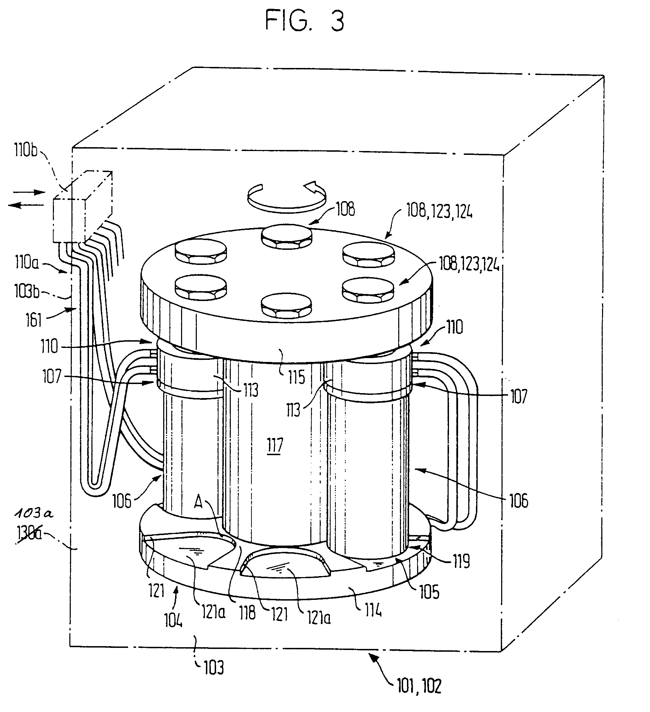

Bei der in Fig. 3 und 4 in durchgehenden Linien dargestellten stehenden Anordnung für die Druckbehälter 106 ist der Gehäuseboden 111 innen halbkugelförmig gerundet und außen flach bzw. horizontal, wodurch etwas mehr Material verbraucht wird.

Die Druckbehälter 106 sind untereinander gleich ausgeführt. In jedem Druckbehälter 106 ist ein Extraktor 125 und ein sogenannter Soxhlet-Apparat 126 integriert, die ausgebildet sind.

Im einzelnen ist im Druckbehälter 106 eine Lösungsmittelkammer 127 und darüber eine Probenkammer 128 angeordnet, wobei zwischen der Lösungsmittelkammer 127 und einem sich über der Probenkammer 128 befindlichen Dampfraum 129 eine aufsteigende Dampfleitung 131 erstreckt, wobei im Dampfraum 129 die Kühleinrichtung 110 so angeordnet ist, daß das im Bereich der Kühleinrichtung 110 kondensierende Kondensat 132 des Reagenz- oder Lösungsmittels in die Probenkammer 128 gelangt und vorzugsweise auf die darin befindliche Probe 133 tropft, und wobei der Probenkammer 128 ein Überlauf 134 zugeordnet ist, der in die Lösungsmittelkammer 127 mündet.

Bei der vorliegenden bevorzugten Ausgestaltung ist die Probenkammer 128 in einem als separates Bauteil ausgebildeten Probenbehälter 135 topfförmiger Bauform angeordnet, der von oben in das Gehäuse 109 einsetzbar ist und über der Lösungsmittelkammer 127 gegen ein weiteres Absinken in der Lösungsmittelkammer 127 abgestützt ist. Vorzugsweise ist hierzu eine insbesondere zentrale Fußstange 136 vorgesehen, die sich als verjüngte Verlängerung des Probenbehälters 1 von dessen Behälterboden nach unten erstreckt und auf dem Gehäuseboden 111 aufsteht. Der Probenbehälter 135 ist in seinem Außendurchmesser etwas geringer bemessen als der Innendurchmesser des Gehäuses 9, so daß dazwischen ein Ringspalt RS vorhanden ist, der die Dampfleitung 131 bildet.

Der Überlauf 134 ist in den Körper des Probenbehälters 135 integriert, d.h. durch darin verlaufende Kanäle gebildet, so daß keine radial nach außen vorragenden Teile der Überlaufleitung 137 vorhanden sind. Im einzelnen besteht die Überlaufleitung 137 aus einem vom Bodenbereich der Probenkammer 128 radial ausgehenden Kanalabschnitt 137a, von dem sich ein zweiter Kanalabschnitt 137b nach oben bis in die Niveauhöhe 138 des Probenbehälters 35 erstreckt, einem horizontalen und sich vorzugsweise in Umfangsrichtung erstreckenden Kanalabschnitt 137c und einen vertikalen Kanalabschnitt 137d, wobei der horizontale Kanalabschnitt 137c, die Kanalabschnitte 137a und 137d miteinander verbindet und der Kanalabschnitt 137d nach unten aus dem Körper des Probenbehälters 135 vorzugsweise in Form eines in den Probenbehälter von unten eingesteckten Röhrchens 139 ausmündet. Die Höhe der Lösungsmittelkammer 127 ist größer zu bemessen als das Niveaumaß b des Lösungsmittels 130a, so daß die Abströmung des Dampfes gewährleistet ist.

Vorzugsweise ist der Probenbehälter 135 aus mehreren Einzelteilen zusammengesetzt, die es ermöglichen, die Kanalabschnitte 137a bis 137d durch Spritzgießen zu fertigen, so daß sie nicht spanabhebend eingearbeitet werden müssen und deshalb Material eingespart und der Herstellungsaufwand wesentlich verringert werden kann.

Der Boden 135a des Probenbehälters 135 ist vorzugsweise nach unten konvergent geformt, insbesondere hohlkegelförmig.

Der Probenbehälter 135 bzw. seine Einzelteile und/oder Gehäuse 109 können im wesentlichen aus Mikrowellen durchlässigem Material wie insbesondere Kunststoff, Glas, Quarz bzw. Porzellan oder aus Mikrowellen teilabsorbierendem Material bestehen, wozu sich ein mikrowellenduchlässiges Material, insbesondere ebenfalls Kunststoff eignet, in das Teile eines Mikrowellen absorbierenden Materials eigebettet sind. Ein bevorzugtes Material ist Kunststoff, in den Materialteile, wie Partikel aus mikrowellenabsorbierendem Material, insbesondere Graphit eingemischt oder legiert sind und der unter der Bezeichnung Weflon an sich bekannt ist.

Ein Mikrowellen durchlässiges Material für den Probenbehälter 135 eignet sich in dem Falle, in dem das Lösungsmittel und/oder das Probenmaterial ein Mikrowellen absorbierender Stoff ist, der bei der Mikrowellenbestrahlung direkt erhitzt wird. Bei der Verwendung eines Mikrowellen durchlässigen Stoffes als Lösungsmittel und/oder Probenmaterial bedarf es eines indirekten Heizkörpers zur Erhitzung der Probe 133 und/oder des Lösungsmittels, der im vorliegenden Fall durch den Probenbehälter 135 gebildet ist, der die erforderliche Hitze erzeugt und an das darin befindliche Lösungsmittel 130 und die Probe 133 im Probenbehälter 135 sowie auch an das sich in der Lösungsmittelkammer 127 befindliche Lösungsmittels 130a weiterleitet. Die Erhitzung des in der Lösungsmittelkammer 127 befindlichen Lösungsmittels 130a ist von Bedeutung, um dessen Verdampfung herbeizuführen, was noch beschrieben wird. Um die Erhitzung des Lösungsmittels 130a zu forcieren, kann in der Lösungsmittelkammer 127 wenigstens ein weiteres Teil aus Mikrowellen absorbierendem Material, vorzugsweise ebenfalls aus Weflon, angeordnet sein. Bei der vorliegenden Ausgestaltung ist wenigstens ein Teil, insbesondere ein Ring 146, als zusätzlicher, indirekt wirksamer Heizkörper in der Lösungsmittelkammer 127 vorgesehen, den die Fußstange 136 durchragt.

Zur Erleichterung des Einsetzens und auch der Entnahme der Probe 133 ist ein siebförmiges, topfförmiges Probenaufnahmeteil 147 zur Aufnahme der Probe 133 vorgesehen, das von oben in den Probenbehälter 135 einsetzbar ist. Vorzugsweise ist der Siebboden 147a gerundet oder kegelförmig ausgebildet, so daß die Probe 133 in die Mulde 141 des auf dem Bodenteil 135a aufstehenden Probenaufnahmeteils 147 zu liegen kommt, in der die Probe auch noch mit einer Restmenge des vorhandenen Lösungsmittels 130 weitgehend benetzt wird. Das Probenaufnahmeteil 147 ist vorzugsweise so bemessen, daß es den Probenbehälter 135 überragt oder in den Bereich der sich oberhalb des Verschlußringes 135c befindlichen Ausnehmung hineinragt, wo es handbabungsfreundlich von oben ergriffen werden kann. Das Probenaufnahmeteil 147 besteht insbesondere aus Kunststoff, Glas oder Quarz, vorzugsweise aus Fasermaterial, und kann auch aus dem bereits vorbeschriebenen Mikrowellen absorbierenden Material bestehen.

Es ist vorteilhaft, wenigstens einem der Druckbehälter 106, vorzugsweise mehreren oder allen, wenigstens einen Probenbehälter 135 aus Mikrowellen durchlässigem Material und einen Probenbehälter 135 aus Mikrowellen absorbierendem Material vorzusehen, so daß je nach Verwendung des Materials des Lösungsmittels 130 und/oder der Probe 133 der hinsichtlich der Temperaturentwicklung vorteilhafte Probenbehälter 135 durch Austausch eingesetzt werden kann.

Die Kühleinrichtung 110 weist vorzugsweise einen im Zentrum an der Unterseite des Deckels 113 angeordneten Kühlkörper 151 auf, der insbesondere die Form eines Kühlstabes oder Kühlfingers aufweist und an seinem unteren Ende entweder konvergent oder in seiner Querschnittsabmessung nur so groß bemessen ist, daß sich daran bildendes und nach unten tropfendes Kondensat in den Probenbehälter 135 und insbesondere auf die Probe 133 tropft. Sei der vorliegenden Ausgestaltung ist ein zylindrischer Kühlkörper 151 vorgesehen, dessen unteres Ende nach unten konvergent geformt ist, insbesondere halbkugelförmig gerundet ist. Der Kühlkörper 151 ist an einen Kühlkreislauf angeschlossen, dessen Kühlmedium Luft oder vorzugsweise eine Flüssigkeit, z.B. Wasser sein kann. Der Kühlkörper 151 ist am Deckel 113 befestigt. Es ist deshalb vorteilhaft, die Zuführungs- und Abführungsleitungen 152, 153 für das Kühlmedium, insbesondere seitlich, an den Deckel 113 anzuschließen, wobei sie sich in nebeneinander erstreckenden horizontalen Kanälen 154, 155 im Deckel 113 fortsetzen und in den Kühlkörper 151 erstrecken. Die vertikalen, in den Kühlkörper 151 erstreckenden Leitungsabschnitte 154a, 155a sind vorzugsweise koaxial angeordnet, wobei der Kühlkörper 151 eine hohlzylindrische Wandung 156 aufweist, in die sich von oben koaxial ein Röhrchen 157 erstreckt, das mit seinem unteren Ende vor der Endwand des Kühlkörpers 151 endet und in dessen oberen Endbereich die Zuführungsleitung 152 verbindet, während die Abführungsleitung 153 vom oberen Endbereich des sich zwischen der hohlzylindrischen Wandung 156 und dem Röhrchen 157 vorhandenen Ringspaltes 158 abführt.

Im Umfangbereich des Deckels 113 sind Steckkupplungen 159, insbesondere Schnellschlußverbindungen, zum Anschließen von nur in Fig. 3 dargestellten Schläuchen 161 vorgesehen, die die Gehäusewandung 103b des Heizgerätes 102 vorzugsweise durchsetzen und an die außen angebrachte Pumpe 110b angeschlossen sind.

Alle übrigen Teile des Druckbehälters 106 einschließlich des hin und her schwenkbaren Halters 104 und der Schläuche 161 bestehen aus Mikrowellen durchlässigem Material.

Die Funktion der Vorrichtung 101 ist folgende.

Zum Aufbereiten oder Extrahieren des Probenmaterials in wenigstens einem Druckbehälter 106 der Vorrichtung 101 werden bei aus dem Halter 104 herausgezogenen und geöffneten Druckbehälter 106 Lösungsmittel 130 und/oder 130a und die zugehörige Probe 133 in das Gehäuse 112 bzw. in den Probenbehälter 135 eingegeben. Dann wird das Gehäuse 109 mit dem Deckel 113 geschlossen und der Druckbehälter 106 in den Halter 4 eingesetzt sowie vorgespannt und die Leitungen 161 der Kühleinrichtung 110 angeschlossen. Nach dem Schließen des Heizraums 103 kann das Mikrowellenheizgerät eingeschaltet und vorzugsweise der Halter 104 in Rotation gesetzt werden. Bei der Mikrowellenbestrahlung werden das Lösungsmittel und das Probenmaterial (Probe 133) je nach Material direkt oder indirekt durch die als Heizkörper wirksamen Teile (Probenbehälter 135, Ring 146) erhitzt, wobei nicht nur die Innentemperatur im Druckbehälter 6 ansteigt, sondern auch der Innendruck aufgrund der Erhitzung und Verdampfung des Lösungsmittels 30. Der Dampf steigt von der Lösungsmittelkammer 127 durch den Ringspalt RS zwischen dem Probenbehälter 135 und der Gehäusewand 112 (Dampfleitung 131) oder durch eine oder mehrere Nuten in der Umfangsfläche nach oben, indem er an einer Abkühlung durch Wärmeübertragung vom Probenbehälter 135 her gehindert wird. Im Dampfraum 129 schlägt sich der Dampf am Kühlkörper 151 als Kondensat nieder und tropft in die Probenkammer 128 und auf die Probe 133. Wenn darin das kondensierte Lösungsmittel 130b die Niveauhöhe 138 erreicht, ist ein weiterer Anstieg nicht möglich, da das Lösungsmittel 130b durch den Überlauf 134 in die Lösungsmittelkammer 127 zurückströmt. Dabei kann sie aufgrund der Saugwirkung des Auslaufs (37d, 39) in die Lösungsmittelkammer 127 ausfließen. Auf diese Weise kann das Lösungsmittel 130 bzw. 130a in kontinuierlichem Kreislauf benutzt werden, bis es nach einem bestimmten Sättigungsgrad auszutauschen ist.

Bei dieser Vorrichtung 101 bzw. bei diesem Verfahren erfolgt die Extraktion in einem geschlossenen System, wobei die Extraktion nicht nur bei Überdruck sondern auch bei höheren Extraktionstemperaturen erfolgen kann. Hierdurch wird eine verbesserte Löslichkeit erzielt.

Nachfolgend werden weitere Vorteile der Vorrichtung 101 bzw. der mit ihr durchführbaren Verfahren beschrieben.

Es findet ein automatischer Kreislauf des Lösungsmittels statt, wobei aufgrund des erhöhten Drucks und des erhöhten Siedepunktes eine bessere Benetzung und Extraktion des Probenmaterials erreicht wird, wobei das Lösungsmittel durch den Druck in das Probenmaterial gepresst wird. Z.B. steigt der Siedepunkt von Dihlormethan von 57°C bei Normaldruck auf 51°C bei etwa 10 bar.

Aufgrund des geschlossenen Kreislaufs des Lösungsmittels wird ein geringer Lösungsmitterverbrauch errreicht, wobei auch Verluste durch Verdampfung außerhalb des Systems nicht stattfinden.

Es wird auch eine kurze Aufheizzeit durch die gezielte Wärmezufuhr, (Mikrowellenabsorption durch Lösungsmittel oder synthetische und inerte Heizelemente) erreicht.

Die beim Öffnen der Druckbehälter freiwerdenden Dämpfe können in einfacher Weise abgesaugt werden, z.B. durch eine an den Heizraum angeschlossene Absaugvorrichtung, wodurch Dampf-Konzentrationen am Arbeitsplatz vermieden werden. Dies gilt insbesondere für toxische Lösungsmittel.

Es zeigt sich damit, daß die Vorrichtung 1 und die Vorrichtung 101 vorteilhaft zum Verdampfen bzw. Trocknen und Extrahieren von Proben eingesetzt werden können, wobei die Vorrichtung 101 sich insbesondere zum Extrahieren eignet.

Es ist im Rahmen der Erfindung jedoch auch möglich und vorteilhaft, beide Vorrichtungen 1, 101 für ein Extraktionsverfahren einzusetzen und zwar insbesondere dann, wenn die Probenaufnahmeteile 29, 147 und die sie aufnehmenden Kammmern 28, 162 von im wesentlichen gleicher Ausgestaltung, Form und Größe sind, so daß ein Probeaufnahmeteil B als gemeinsames Probenaufnahmeteil in beide Vorrichtungen 1, 101 paßt. In einem solchen Falle ist es möglich, die Probe mit dem Probenaufnahmeteil B in beiden Vorrichtungen einzusetzen und zu behandeln.

Im folgenden wird ein Ausführungsbeispiel eines solchen Verfahrens zum Extrahieren und Trocknen einer Probe beschrieben. Die Probe, z.b. Käse, wird in das Probenaufnahmeteil B eingegeben und eingewogen. Dann wird das Probenaufnahmeteil B in die Aufnahmekammer 28 eines Behälters 6 eingesetzt und letzterer wird in den Halter 4 eingeschoben. Es erfolgt dann ein Trocknungsvorgang in der Vorrichtung 1 durch Erhitzen in der vorbeschriebenen Weise mit Mikrowellen, wobei die Dämpfe abgesaugt werden und dabei ein Unterdruck erzeugt wird, wobei die Trocknung beschleunigt wird.

Als nächster Schritt soll beispielsweise der Fettgehalt der Trockenmasse festgestellt werden, was durch Auslösen des Fettes erfolgt. Für diese Extraktion wird das Probenaufnahmeteil B mit dem Probenmaterial aus dem Behälter 6 herausgenommen und in die Kammer 162 eines Druckbehälters 106 der Vorrichtung 101 bei geöffnetem Gehäuse 109 eingegeben und der Druckbehälter 106 verschlossen und in den Halter 104 der Vorrichtung 101 eingesetzt und letzterer in Betrieb gesetzt, wobei die Probe in der vorbeschriebenen Weise erhitzt und bei Überdruck und auch hohen Temperaturen extrahiert wird. Als Lösungsmittel eignen sich z.B. Kohlenwasserstoffe.

Nach der Beendigung dieses Extraktionsschrittes wird das Probenaufnahmeteil A mit dem extrahierten Probenmaterial aus den Druckbehältern 106 nach dessen Entnahme aus der Vorrichtung 101 und Öffnung entnommen und bei Abschaltung bzw, Nichteinschaltung der Pumpe 46, d.h. ohne die Zuführung von Lösungsmittel 44, erneut in vorbeschriebener Weise getrocknet, wobei das Lösungsmittel aus den Probenrückstand enfernt wird. Nach Beendigung des erneuten Trocknungsvorganges wird das Probenaufnahmeteil B mit dem extrahierten und getrockneten Probenrückstand entnommen und erneut gewogen, wodurch der Fettgehalt festgestellt werden kann.

Jeder Transport einer Probe zwischen verschiedenen Behandlungsstufen in verschiedenen Behältern bzw. Vorrichtungen beinhaltet die Gefahr einer Kontermination oder eines Verlustes von Anteilen der Probe und führt zwangsläufig zu Fehlern. Diese Nachteile werden bei diesem erfindungsgemäßen Verfahren vermieden, weil ein und dasselbe Probenaufnahmeteil B verwendet und in den Vorrichtungen 1, 101 benutzt werden kann.

## Patentansprüche

1. Einrichtung zum Durchführen eines Verfahrens zum Extrahieren von Proben (133) mittels eines verdampfungsfähigen Mittels (130, 31a), insbesondere Lösungsmittels, bestehend aus einer ersten Vorrichtung (101), mit
- wenigstens einem Behälter (106),
- einem vorzugsweise durch Mikrowellen wirksamen Heizgerät (102) und einem Halter (104) für den Behälter (106) im Heizraum (103),
- wobei der Behälter (106) in einer Aufnahmekammer (128) ein Probenaufnahmeteil (B) für die Probe (133),
- eine Aufnahmekammer (127) für das verdampfungsfähige Mittel (130),
- einen Soxhlet-Apparat (126), mit dem das Mittel (130) mittels einer aufführenden Leitung (131) und einer abführenden Leitung (139) im Kreislauf zur Probe (133) bewegbar ist,
- und eine Kühlzone (129) oberhalb der Aufnahmekammer (128) für die Probe (133) aufweist,
**dadurch gekennzeichnet**,
- daß der Vorrichtung (101) eine zweite Vorrichtung (1) zum Verdampfen und Trocknen der Probe (133) in wenigstens einem Behälter (6) zugeordnet ist
- wobei die zweite Vorrichtung (1) eine insbesondere durch Mikrowellen beheizbare Heizkammer (3) für den Behälter (6), eine Absaugvorrichtung mit einer Absaugleitung (9, 9a) und eine Zuführungsvorrichtung mit einer Zuführungsleitung (11, 11a) für ein Gas (45) aufweist,
- wobei die Absaugleitung (9, 9a) und die Zuführungsleitung (11, 11a) mit dem Innenraum des Behälters (6) verbunden sind
- und wobei die Behälter (106, 6) der ersten und der zweiten Vorrichtung (101, 1) so ausgebildet sind, daß das Probenaufnahmeteil (B) in sie hineinpaßt.

2. Einrichtung nach Anspruch 1,
**dadurch gekennzeichnet**,
daß die erste Vorrichtung (101) wenigstens einen Druckbehälter (106) aufweist mit einer ersten Kammer (127) zur Aufnahme des Mittels (130),
einem höher als die erste Kammer (127) angeordneten Probenbehälter (135) mit einer zweiten Kammer (128) zur Aufnahme einer Probe (133),
einer die erste Kammer (127) mit der zweiten Kammer (128) verbindenden Dampfleitung (131)
einer die zweite Kammer (128) mit der ersten Kammer (127) verbindenden Überlaufleitung (137)
und einer Kühleinrichtung (110) für einen über dem Probenbehälter (135) angeordneten Dampfraum (129),
wobei die Überlaufleitung (137) durch einen im Körper des Probenbehälters (35) verlaufenden Kanal (137a, 137b, 137c, 137d) gebildet ist.

3. Einrichtung nach Anspruch 1,
**dadurch gekennzeichnet,**
daß die erste Vorrichtung (101) wenigstens einen Druckbehälter (106) aufweist mit einer ersten Kammer (127) zur Aufnahme des Mittels (130),
einem höher als die erste Kammer (127) angeordneten Probenbehälter (135) mit einer zweiten Kammer (128) zur Aufnahme einer Probe (133),
einer die erste Kammer (127) mit der zweiten Kammer (128) verbindenden Dampfleitung (131),
einer die zweite Kammer (128) mit der ersten Kammer (127) verbindenden Überlaufleitung (37)
- und einer Kühleinrichtung (110) für einen über dem Probenbehälter (135) angeordneten Dampfraum (129),
- wobei im Druckbehälter (106) wenigstens ein Heizelement aus mikrowellenabsorbierendem Material zum Aufheizen des Mittels vorgesehen ist,
- und wobei das Heizelement in der ersten und/oder zweiten Kammer (127, 128) angeordnet ist oder die zweite Kammer (127, 128) bildet.

4. Einrichtung nach Anspruch 1,
**dadurch gekennzeichnet,**
daß die erste Vorrichtung (101) wenigstens einen Druckbehälter (106) aufweist mit
- einer ersten Kammer (127) zur Aufnahme des Mittels (130),
- einem höher als die erste Kammer (127) angeordneten Probenbehälter (135) mit einer zweiten Kammer (128) zur Aufnahme einer Probe (133),
- einer die erste Kammer (127) mit der zweiten Kammer (128) verbindenden Dampfleitung (131),
- einer die zweite Kammer (128) mit der ersten Kammer (127) verbindenden Überlaufleitung (137)
- und einer Kühleinrichtung (10) für einen über dein Probenbehälter (135) angeordneten Dampfraum (129),
- wobei die Vorrichtung (101) einen verschließbaren Heizraum (103) zur Aufnahme des Druckbehälters (106) aufweist,
- wobei der Druckbehälter (106) aus einem topfförmigen Gehäuse (109) mit einem darauf frei aufliegenden Deckel (113) aus mikrowellendurchlässigem Material, insbesondere Kunststoff, besteht,
- wobei das druckfeste Gehäuse (109) die erste Kammer (127) bildet
- und wobei die Innenfläche des Bodens (111) des im Querschnitt vorzugsweisen runden Gehäuses (109) halbkugelförmig gerundet ist.

5. Einrichtung nach Anspruch 1,
**dadurch gekennzeichnet,**
daß die erste Vorrichtung (101) wenigstens einen Druckbehälter (106) aufweist mit
- einer ersten Kammer (127) zur Aufnahme des Mittels (130),
- einem höher als die erste Kammer (127) angeordneten Probenbehälter (135) mit einer zweiten Kammer (128) zur Aufnahme einer Probe (133),
- einer die erste Kammer (127) mit der zweiten Kammer (128) verbindenden Dampfleitung (131),
- einer die zweite Kammer (128) mit der ersten Kammer (127) verbindenden Überlaufleitung (137)
- und einer Kühleinrichtung (110) für einen über dem Probenbehälter (135) angeordneten Dampfraum (129),
- wobei der Kühlkörper (151) der Kühleinrichtung (110) an der Unterseite des Deckels (13) angeordnet ist.

6. Einrichtung nach Anspruch 1,
**dadurch gekennzeichnet,**
daß die erste Vorrichtung (101) Wenigstens einen Druckbehälter (106) aufweist mit
- einer ersten Kammer (127) zur Aufnahme des Mittels (130),
- einem höher als die erste Kammer (127) angeordneten Probenbehälter (135) mit einer zweiten Kammer (128) zur Aufnahme einer Probe (133),
- einer die erste Kammer (127) mit der zweiten Kammer (128) verbindenden Dampfleitung (31),
- einer die zweite Kammer (128) mit der ersten Kammer (127) verbindenden Überlaufleitung (137)
- und einer Kühleinrichtung (110) für einen über dem Probenbehälter (135) angeordneten Dampfraum (129),
- wobei der Probenbehälter (135) einen Fuß (136) aufweist, mit dem er in die erste Kammer (127) hineinragt oder auf deren Boden (111) steht.

7. Einrichtung nach einem der Ansprüche 2 bis 6,
**dadurch gekennzeichnet,**
daß der Probenbehälter (135) und/oder der Fuß (136) wenigstens teilweise aus mikrowellendurchlässigem oder mikrowellenabsorbierendem Material, insbesondere aus Kunststoff besteht.

8. Einrichtung nach einem der Ansprüche 2 bis 7,
**dadurch gekennzeichnet,**
daß sich in der Wandung des Probenbehälters (135) von dessen Bodenbereich ein radialer Kanalabschnitt (137a) erstreckt, der in einen sich aufwärts erstreckenden Kanalabschnitt (137b) übergeht, von dem sich in Höhe des Niveaus (138) des Probenbehälters (135) ein etwa horizontaler Kanalabschnitt (137c) vorzugsweise in Umfangsrichtung erstreckt und in einen nach unten aus dem Probenbehälter (135) ausmündenden Kanalabschnitt (137d) übergeht.

9. Einrichtung nach einem der Ansprüche 2 bis 8,
**dadurch gekennzeichnet,**
daß der Probenbehälter (135) aus mehreren Probenbehälterteilen (135a, 135b, 135c) besteht deren Teilungsfugen so verlaufen, daß die Teile mit den Kanalabschnitten (137a, 137b, 137c, 137d) durch Spritzgießen herstellbar sind.

10. Einrichtung nach Anspruch 9,
**dadurch gekennzeichnet,**
daß der Probenbehälter aus einem Hülsenteil (137b) mit einer oberseitigen und unterseitigen Stufenausnehmung (142, 144), einem in die untere Stufenausnehmung (142) gegen die zugehörige Stufenfläche (145) eingesetztes Bodenteil (135a) und einem die obere Stufenausnehmung (144) gegen die zugehörige Stufenfläche (143) eingesetztes Ringteil (135c) besteht.

11. Einrichtung nach einem der Ansprüche 2 bis 10,
**dadurch gekennzeichnet,**
daß zwischen dem Probenbehälter (135) und der Innenwandung des Gehäuses (109) ein oder mehrere aufrechte Kanäle oder ein Ringspalt (131, RS) vorhanden ist.

12. Einrichtung nach einem der Ansprüche 3 bis 11,
**dadurch gekennzeichnet,**
daß das Heizelement in der ersten Kammer (127) ein Ring (146) ist.

13. Einrichtung nach einem der Ansprüche 5 bis 12,
**dadurch gekennzeichnet,**
daß der Kühlkörper (151) wenigstens in seinem zentralen Bereich eine nach unten konvergente, kegelförmige, gerundete oder vorzugsweise halbkreisförmig gerundete Ablauffläche für Kondensat aufweist.

14. Einrichtung nach einem der Ansprüche 5 bis 13,
**dadurch gekennzeichnet,**
daß der Kühlkörper (151) ein vorzugsweise im Zentrum angeordneter Kühlstab oder Kühlfinger ist.

15. Einrichtung nach einem der Ansprüche 5 bis 14,
**dadurch gekennzeichnet,**
daß der Kühlkörper (151) durch eine Hülse mit einem geschlossenen Boden gebildet ist, in die von oben koaxial ein Röhrchen (157) hineinragt das in einem Abstand vor dem Boden endet, und in das die eine Leitung (152) eines Kühlkreislaufs mündet, wobei die andere Leitung (153) vom Ringraum zwischen der Hülse und dem Röhrchen im oberen Endbereich der Hülse ausgeht.

16. Einrichtung nach einem der vorherigen Ansprüche,
**dadurch gekennzeichnet,**
daß der Kühlkörper (151) in eine unterseitige Ausnehmung des Deckels (113) eingesetzt und insbesondere durch einen Preßsitz oder Kleben befestigt ist.

17. Einrichtung nach einem der vorherigen Ansprüche,
**dadurch gekennzeichnet,**
daß am Deckel (113), insbesondere an dessen seitlicher Umfangsfläche wenigstens eine, vorzugsweise zwei Steck- oder Schnellkupplungen (159) für den Anschluß einer Kühlkreislaufversorgung (110a, 110b) vorgesehen sind.

18. Einrichtung nach einem der vorherigen Ansprüche,
**dadurch gekennzeichnet,**
daß der Behälter (106) der ersten Vorrichtung (101) mit einem vorzugsweise auf seinem Deckel (113) angeordneten elastischen Druckstück (122) zwischen zwei übereinander angeordneten Halteteilen (114, 115) einsetzbar ist von denen das eine insbesondere das obere Halteteil (114) längs der Achse des Druckbehälters (106) einstellbar ist.

## Claims

1. Apparatus for carrying out a process for the extraction of samples (133) by means of a vaporizable agent (130, 31a), especially a solvent, consisting of a first device (101) with
- at least one container (106),
- a heater (102), preferably working by microwaves, and a holder (104) for the container (106) in the heating chamber (103),
- the container (106) having, in a reception chamber (128), a sample reception compartment (B) for the sample (133),
- a reception chamber (127) for the vaporizable agent (130),
- a Soxhlet apparatus (126) with which the agent (130) can be circulated to the sample (133) by means of an inlet line (131) and an outlet line (139),
- and a cooling zone (129) above the reception chamber (128) for the sample (133),
characterized in that
- the device (101) comprises a second device (1) for vaporizing and drying the sample (133) in at least one container (6),
- the second device (1) having a heating chamber (3), heatable especially by microwaves, for the container (6), a suction device with a suction line (9, 9a), and a feed device with a supply line (11, 11a) for a gas (45),
- the suction line (9, 9a) and the supply line (11, 11a) being connected to the interior of the container (6),
- and the containers (106, 6) of the first and second devices (101, 1) being designed so that the sample reception compartment (B) fits into them.

2. Apparatus according to Claim 1,
characterized in that
the first device (101) has at least one pressure container (106) with a first chamber (127) for receiving the agent (130),
a sample container (135), arranged higher than the first chamber (127) with a second chamber (128) for receiving a sample (133),
a vapour line (131) connecting the first chamber (127) to the second chamber (128),
an overflow line (137) connecting the second chamber (128) to the first chamber (127),
and a cooling apparatus (110) for a vapour chamber (129) arranged above the sample container (135),
the overflow line (137) being formed by a channel (137a, 137b, 137c, 137d) running through the body of the sample container (135).

3. Apparatus according to Claim 1,
characterized in that
the first device (101) has at least one pressure container (106) with a first chamber (127) for receiving the agent (130),
a sample container (135), arranged higher than the first chamber (127), with a second chamber (128) for receiving a sample (133),
a vapour line (131) connecting the first chamber (127) to the second chamber (126),
an overflow line (137) connecting the second chamber (128) to the first chamber (127),
- and a cooling apparatus (110) for a vapour chamber (129) arranged above the sample container (135),
- at least ore healing element made of a microwave-absorbent material being provided in the pressure container (106) for heating the agent,
- and the heating element being arranged in the first and/or second chamber (127, 128) or forming the second chamber (127, 128).

4. Apparatus according to Claim 1,
characterized in that
the first device (101) has at least one pressure container (106) with
- a first chamber (127) for receiving the agent (130),
- a sample container (135), arranged higher than the first chamber (127), with a second chamber (128) for receiving a sample (133),
- a vapour line (131) connecting the first chamber (127) to the second chamber (128),
- an overflow line (137) connecting the second chamber (128) to the first chamber (127),
- and a cooling apparatus (110) for a vapour chamber (129) arranged above the sample container (135),
- the device (101) having a sealable heating chamber (103) for accommodating the pressure container (106),
- the pressure container (106) consisting of a pot-shaped housing (109) with a cover (113), made of a microwave-permeable material, especially plastic, sitting freely on top,
- the pressure-resistant housing (109) forming the first chamber (127),
- and the internal surface of the bottom (111) of the housing (109), which is preferably of circular cross-section, being hemispherically rounded.

5. Apparatus according to Claim 1,
characterized in that
the first device (101) has at least one pressure container (106) with
- a first chamber (127) for receiving the agent (130),
- a sample container (135), arranged higher than the first chamber (127), with a second chamber (128) for receiving a sample (133),
- a vapour line (131) connecting the first chamber (127) to the second chamber (128),
- an overflow line (137) connecting the second chamber (128) to the first chamber (127),
- and a cooling apparatus (110) for a vapour chamber (129) arranged above the sample container (135),
- the cooling body (151) of the cooling apparatus (110) being arranged on the bottom side of the cover (113).

6. Apparatus according to Claim 1,
characterized in that
the first device (101) has at least one pressure container (106) with
- a first chamber (127) for receiving the agent (130),
- a sample container (135), arranged higher than the first chamber (127), with a second chamber (128) for receiving a sample (133),
- a vapour line (131) connecting the first chamber (127) to the second chamber (128),
- an overflow line (137) connecting the second chamber (128) to the first chamber (127),
- and a cooling apparatus (110) for a vapour chamber (129) arranged above the sample container (135),
- the sample container (135) having a foot (136) with which it projects into the first chamber (127) or stands on the bottom (111) thereof.

7. Apparatus according to one of Claims 2 to 6,
characterized in that
the sample container (135) and/or the foot (136) are made at least partially of a microwave-permeable or microwave-absorbent material, especially plastic.

8. Apparatus according to one of Claims 2 to 7,
characterized in that,
in the wall of the sample container (135), a radial channel section (137a) extends from its bottom region and leads into a channel section (137b) extending upwards, from which, at the level (138) of the sample container (135), an approximately horizontal channel section (137c) extends, preferably in a peripheral direction, and leads into a channel section (137d) exiting the sample container (135) in a downward direction.

9. Apparatus according to one of Claims 2 to 8,
characterized in that
the sample container (135) consists of several sample container parts (135a, 135b, 135c) which are partitioned in such a way that the parts with the channel sections (137a, 137b, 137c, 137d) can be produced by injection moulding.

10. Apparatus according to Claim 9,
characterized in that
the sample container consists of a sleeve part (137b) with stepped recesses (142, 144) on the top and bottom sides, a bottom part (135a) inserted in the lower stepped recess (142) against the corresponding step surface (145), and an annular part (135c) inserted in the upper stepped recess (144) against the corresponding step surface (143).

11. Apparatus according to one of Claims 2 to 10,
characterized in that
one or more upright channels or an annular passage (131, AP) are present between the sample container (135) and the inner wall of the housing (109).

12. Apparatus according to one of Claims 3 to 11,
characterized in that
the heating element in the first chamber (127) is a ring (146).

13. Apparatus according to one of Claims 5 to 12,
characterized in that,
at least in its central region, the cooling body (151) has a downward converging, conical, rounded or, preferably, semicircularly rounded draining surface for condensate.

14. Apparatus according to one of Claims 5 to 13,
characterized in that
the cooling body (151) is a cold rod or cold finger, preferably arranged in the centre.

15. Apparatus according to one of Claims 5 to 14,
characterized in that
the cooling body (151) is formed by a sleeve with a closed bottom, into which a small tube (157) projects coaxially from above, which tube terminates at a distance from the bottom and into which tube one line (152) of a cooling circuit leads, the other line (153) exiting from the annular space between the sleeve and the tube in the upper end region of the sleeve.

16. Apparatus according to one of the preceding claims,
characterized in that
the cooling body (151) is inserted in a recess in the bottom side of the cover (113) and is secured in particular by means of a press fit or adhesion.

17. Apparatus according to one of the preceding claims,
characterized in that,
on the cover (113), especially on its lateral peripheral surface, at least one or, preferably, two push-on or quick-fitting couplings (159) are provided for the attachment of a cooling circuit (110a, 110b).

18. Apparatus according to one of the preceding claims,
characterized in that
the container (106) of the first device (101) can be inserted, by way of an elastic thrust member (122) which is preferably arranged on its cover (113), between two clamps (114, 115) arranged one above the other, one of which, especially the upper clamp (114), is adjustable along the axis of the pressure container (106).

## Revendications

1. Dispositif pour la mise en oeuvre d'un procédé pour l'extraction de composés d'échantillons (133) à l'aide d'un agent d'évaporation (130, 31a), en particulier à l'aide d'un solvant, comprenant un premier dispositif (101) avec
- au moins un récipient (106),
- un appareil de chauffage (102), de préférence à micro-ondes, et un support (104) pour le récipient (106) dans l'enceinte de chauffage (103),
- le récipient (106) présentant dans une chambre de réception (128) un élément de réception d'échantillon (B) pour l'échantillon (133),
- une chambre de réception (127) pour l'agent d'évaporation (130),
- un appareil de Soxhlet (126) par lequel l'agent (130) peut être mis en circulation autour de l'échantillon (133) à l'aide d'une conduite d'entrée (131) et d'une conduite de sortie (139),
- et une zone de refroidissement (129) au-dessus de la chambre de réception (128) pour l'échantillon (133),
caractérisé par le fait
- qu'au dispositif (101) est associé un second dispositif (1) pour évaporer et sécher l'échantillon (133) dans au moins un récipient (6),
- le second dispositif (1) présentant une enceinte de chauffage (3) chauffée par micro-ondes pour le récipient (6), un dispositif d'extraction avec une conduite d'extraction (9, 9a) et un dispositif d'alimentation avec une conduite d'alimentation (11, 11a) pour un gaz (45),
- la conduite d'extraction (9, 9a) et la conduite d'alimentation (11, 11a) étant connectées à l'espace intérieur du récipient (6)
- et les récipients (106, 6) des premier et second dispositifs (101, 1) étant agencés de manière telle que l'élément de réception d'échantillon (B) s'y adapte.

2. Dispositif selon la revendication 1, caractérisé par le fait que le premier dispositif (101) présente au moins un récipient pressurisé (106) avec
une première chambre (127) pour recevoir l'agent (130),
un récipient à échantillon (135) disposé plus haut que la première chambre (127) avec une seconde chambre (128) pour recevoir un échantillon (133),
une conduite de vapeur (131) reliant la première chambre (127) à la seconde chambre (128),
une conduite à débordement (137) reliant la seconde chambre (128) à la première chambre (127)
et un dispositif de refroidissement (110) pour une chambre de vapeur (129) disposée au-dessus du récipient à échantillon (135),
la conduite à débordement (137) étant formée par un canal (137a, 137b, 137c, 137d) aménagé dans le corps du récipient à échantillon (135).

3. Dispositif selon la revendication 1, caractérisé par le fait que le premier dispositif (101) présente au moins un récipient pressurisé (106) avec
une première chambre (127) pour recevoir l'agent (130),
un récipient à échantillon (135) disposé plus haut que la première chambre (127), avec une seconde chambre (128) pour recevoir un échantillon (133),
une conduite de vapeur (131) reliant la première chambre (127) à la seconde chambre (128),
une conduite à débordement (137) reliant la seconde chambre (128) à la première chambre (127)
et un dispositif de refroidissement (110) pour une chambre de vapeur (129) disposée au-dessus du récipient à échantillon (135),
au moins un élément chauffant en un matériau absorbant les micro-ondes étant prévu à l'intérieur du récipient pressurisé et
l'élément chauffant étant disposé dans la première et/ou la seconde chambre (127, 128) ou formant la seconde chambre (127, 128).

4. Dispositif selon la revendication 1, caractérisé par le fait que le premier dispositif (101) présente au moins un récipient pressurisé (106) avec
une première chambre (127) pour recevoir l'agent (130),
un récipient à échantillon (135) disposé plus haut que la première chambre (127) avec une seconde chambre (128) pour recevoir un échantillon (133),
une conduite de vapeur (131) reliant la première chambre (127) à la seconde chambre (128),
une conduite à débordement (137) reliant la seconde chambre (128) à la première chambre (127)
et un dispositif de refroidissement (10) pour une chambre de vapeur (129) disposée au-dessus du récipient à échantillon (135),
le dispositif (101) présentant une chambre de chauffage (103) pouvant être fermée pour recevoir le récipient pressurisé (106),
le récipient pressurisé (106) étant formé d'un corps en forme de pot (109), avec un couvercle (113) posé librement sur celui-ci, en un matériau perméable aux micro-ondes, notamment en matière plastique,
le corps (109) résistant à la pression formant la première chambre (127) et
la surface intérieure du fond (111) du corps (109) à section de préférence ronde étant arrondie en forme de demi-sphère.

5. Dispositif selon la revendication 1, caractérisé par le fait que le premier dispositif (101) présente au moins un récipient pressurisé (106)
avec une première chambre (127) pour recevoir l'agent (130),
un récipient à échantillon (135) disposé plus haut que la première chambre (127) avec une seconde chambre (128) pour recevoir un échantillon (133),
une conduite de vapeur (131) reliant la première chambre (127) à la seconde chambre (128),
une conduite à débordement (137) reliant la seconde chambre (128) à la première chambre (127)
et un dispositif de refroidissement (110) pour une chambre de vapeur (129) disposée au-dessus du récipient à échantillon (135),
l'élément réfrigérant (151) du dispositif de refroidissement (110) étant disposé sur la face inférieure du couvercle (13).

6. Dispositif selon la revendication 1, caractérisé par le fait que le premier dispositif (101) présente au moins un récipient pressurisé (106) avec
une première chambre (127) pour recevoir l'agent (130),
un récipient à échantillon (135) disposé plus haut que la première chambre (127), avec une seconde chambre (128) pour recevoir un échantillon (133),
une conduite de vapeur (31) reliant la première chambre (127) à la seconde chambre (128),
une conduite à débordement (137) reliant la seconde chambre (128) à la première chambre (127)
et un dispositif de refroidissement (110) pour une chambre de vapeur (129) disposée au-dessus du récipient à échantillon (135),
le récipient à échantillon (135) présentant un pied (136) par lequel il fait saillie dans la première chambre (127) ou repose sur le fond (111) de celle-ci.

7. Dispositif selon une des revendications 2 à 6, caractérisé par le fait que le récipient à échantillon (135) et/ou le pied (136) est réalisé au moins partiellement en un matériau perméable aux ou absorbant les micro-ondes, notamment en une matière plastique.

8. Dispositif selon une des revendications 2 à 7, caractérisé par le fait qu'un tronçon de canal (137a) radial s'étend dans la paroi du récipient à échantillon (135) dans la région du fond de celui-ci, lequel tronçon de canal se raccorde à un tronçon de canal ascendant (137b) à partir duquel, à la hauteur du niveau (138) du récipient à échantillon (135), un tronçon de canal (137c) sensiblement horizontal s'étend de préférence dans la direction circonférentielle.

9. Dispositif selon une des revendications 2 à 8, caractérisé par le fait que le récipient à échantillon (135) est formé de plusieurs parties de récipient (135a, 135b, 135c) dont les plans de joint sont agencés de manière telle que les éléments avec les tronçons de canaux (137a, 137b, 137c, 137d) puissent être fabriqués par moulage par injection.

10. Dispositif selon la revendication 9, caractérisé par le fait que le récipient à échantillon est formé d'une partie manchon (137b) avec des évidements étagés supérieur et inférieur (142, 144), un élément de fond (135a) monté dans l'évidement étagé (142) inférieur contre la surface d'épaulement (145) concernée et un élément en forme d'anneau (135c) placé dans l'évidement étagé (144) supérieur contre la surface d'épaulement (143) concernée.

11. Dispositif selon une des revendications 2 à 10, caractérisé par le fait qu'un ou plusieurs canaux verticaux ou un espace annulaire (131, RS) est prévu entre le récipient à échantillon (135) et la paroi intérieure du corps (109).

12. Dispositif selon une des revendications 3 à 11, caractérisé par le fait que l'élément chauffant dans la première chambre (127) est un anneau (146).

13. Dispositif selon une des revendications 5 à 12, caractérisé par le fait que l'élément réfrigérant (151), au moins dans sa zone centrale, présente une surface d'écoulement pour le condensat qui converge vers le bas, conique ou arrondie ou de préférence est arrondie en demi-cercle.

14. Dispositif selon une des revendications 5 à 13, caractérisé par le fait que l'élément réfrigérant (151) est un barreau ou un doigt de refroidissement qui, de préférence, est disposé de manière centrale.

15. Dispositif selon une des revendications 5 à 14, caractérisé par le fait que l'élément réfrigérant (151) est formé d'un manchon avec un fond fermé dans lequel pénètre par le haut, de manière coaxiale un petit tube (157) qui se termine à distance du fond et dans lequel débouche l'une des conduites (152) d'un circuit de refroidissement, l'autre conduite (153) partant de l'espace annulaire entre le manchon et le petit tube, dans la région d'extrémité supérieure du manchon.

16. Dispositif selon une des revendications précédentes, caractérisé par le fait que l'élément réfrigérant (151) est monté dans une cavité sur la face inférieure du couvercle (113) et plus particulièrement est fixé par assemblage serré ou par collage.

17. Dispositif selon une des revendications précédentes, caractérisé par le fait qu'au moins un, de préférence deux raccords enfichables ou raccords rapides (159) pour le raccordement à une alimentation de circuit de refroidissement (110a, 110b) sont prévus sur le couvercle (113), notamment sur la surface périphérique latérale de celui-ci.

18. Dispositif selon une des revendications précédentes, caractérisé par le fait que le récipient (106) du premier dispositif (101) avec une pièce de pression (122) élastique placée de préférence sur son couvercle (113) peut être monté entre deux éléments de fixation (114, 115) disposés l'un au-dessus de l'autre, parmi lesquels l'un, plus particulièrement l'élément de fixation supérieur (114), est réglable le long de l'axe du récipient pressurisé (106).
